# EUROPEAN PATENT SPECIFICATION

(11) **EP 4 336 815 B1**
(45) Date of publication and mention of the grant of the patent: **13.08.2025**
(21) Application number: 23758891.8
(22) Date of filing: 04.01.2023
(51) Int. Cl.: H04M 3/42, H04W 4/16, H04M 3/02, H04M 3/46, H04W 4/80

(54) **INCOMING CALL RESPONSE METHOD AND CORRESPONDING TERMINAL AND COMMUNICATION SYSTEM**
ANTWORTVERFAHREN FÜR EINGEHENDE ANRUFE UND ENTSPRECHENDES ENDGERÄT UND KOMMUNIKATIONSSYSTEM
PROCÉDÉ DE RÉPONSE D'APPEL ENTRANT ET TERMINAL ET SYSTÈME DE COMMUNICATION CORRESPONDANTS

(30) Priority: 25.02.2022 CN 202210178610
(43) Date of publication of application: 13.03.2024
(73) Proprietor: Honor Device Co., Ltd., Shenzhen, Guangdong 518040 (CN)
(72) Inventor: YAO, Dongqiang, Shenzhen, Guangdong 518040 (CN)
(74) Representative: Maiwald GmbH
(86) International application number: PCT/CN2023/070478
(87) International publication number: WO 2023/160265

(56) References cited:
- CN-A- 106 559 763
- CN-A- 107 172 604
- CN-A- 109 040 456
- CN-A- 113 905 128
- CN-A- 114 244 960
- US-A1- 2016 360 031
- US-A1- 2017 149 846
- US-A1- 2018 352 013
- US-A1- 2020 374 664

## Description

This application claims priority to Chinese Patent Application No. 202210178610.5, filed with the China National Intellectual Property Administration on February 25, 2022 and entitled "METHOD FOR RESPONDING TO INCOMING CALL, CORRESPONDING TERMINAL, AND COMMUNICATION SYSTEM".

### TECHNICAL FIELD

This application relates to the communication field, and in particular, to a method for responding to an incoming call, a corresponding terminal, and a communication system.

### BACKGROUND

Currently, many operators such as China Mobile provide a one-number dual-terminal service (https://hdh.10086.cn/pc/yhszd.jsp). The service may allow a user to add an auxiliary terminal to a mobile phone number account and a package, so that a mobile phone terminal (which may also be referred to as a primary terminal) and the auxiliary terminal are associated and share a same mobile phone number. When the mobile phone number is called, both the associated primary terminal and auxiliary terminal ring as a called terminal. For two associated terminals that use the one-number dual-terminal service, a simultaneous ringing mode may be used for ringing, that is, the primary terminal and the auxiliary terminal simultaneously ring.

In the simultaneous ringing mode, after the user answers a call on either of the primary terminal and the auxiliary terminal, the other terminal stops ringing. However, after the user rejects to answer the call on either of the primary terminal and the auxiliary terminal, the other terminal does not stop ringing, but continues ringing. As a result, the user is disturbed, and user experience is reduced.

US 2017/149846 A1 describes SIP IMS call forking to multiple associated devices.

### SUMMARY

To overcome the foregoing disadvantage, this application provides a method for responding to an incoming call for two associated terminals that use a one-number dual-terminal service, a corresponding terminal, and a communication system.

The present invention is defined by the subject-matter of the independent claims. Additional features of the invention are presented in the dependent claims.

### BRIEF DESCRIPTION OF DRAWINGS

The foregoing and other objectives, features, and advantages of this application are clearer with reference to the detailed description of the accompanying drawings. The accompanying drawings herein are incorporated into this specification, constitute a part of this specification, and are used to explain the principles of this application together with this specification. In the accompanying drawings, same reference numerals represent same or similar elements, features, and structures.
FIG. 1 is a schematic diagram of a scenario to which an embodiment of this application can be applied;
FIG. 2 is a schematic diagram of a hardware structure of a first terminal in two associated terminals that use a one-number dual-terminal service according to an embodiment of this application;
FIG. 3 is a schematic diagram of a hardware structure of a second terminal in two associated terminals that use a one-number dual-terminal service according to an embodiment of this application;
FIG. 4A and FIG. 4B are a flowchart of a method for responding to an incoming call for two associated terminals that use a one-number dual-terminal service according to an embodiment of this application;
FIG. 5A and FIG. 5B are a flowchart of another method for responding to an incoming call for two associated terminals that use a one-number dual-terminal service according to an embodiment of this application;
FIG. 6A and FIG. 6B are a flowchart of a method for responding to an incoming call for two associated terminals that use a one-number dual-terminal service according to another embodiment of this application;
FIG. 7 is a flowchart in which a first terminal determines whether a distance between the first terminal and a second terminal meets a preset level according to another embodiment of this application; and
FIG. 8A and FIG. 8B are a flowchart of another method for responding to an incoming call for two associated terminals that use a one-number dual-terminal service according to another embodiment of this application.

### DESCRIPTION OF EMBODIMENTS

The terms "first", "second", "third", and the like in the specification, claims, and accompanying drawings of this application are used to distinguish between different objects, but are not used to limit a specific sequence.

In embodiments of this application, words such as "example" or "for example" are used to represent giving examples, illustrations, or descriptions. Any embodiment or design solution described as "an example" or "for example" in the embodiments of this application should not be construed as being more preferred or advantageous than other embodiments or design solutions. Exactly, use of the word such as "as an example" or "for example" is intended to present related concepts in a specific manner.

The terms used in implementations of this application are merely intended to explain specific embodiments of this application and are not intended to limit this application. The following describes embodiments of this application in detail with reference to the accompanying drawings.

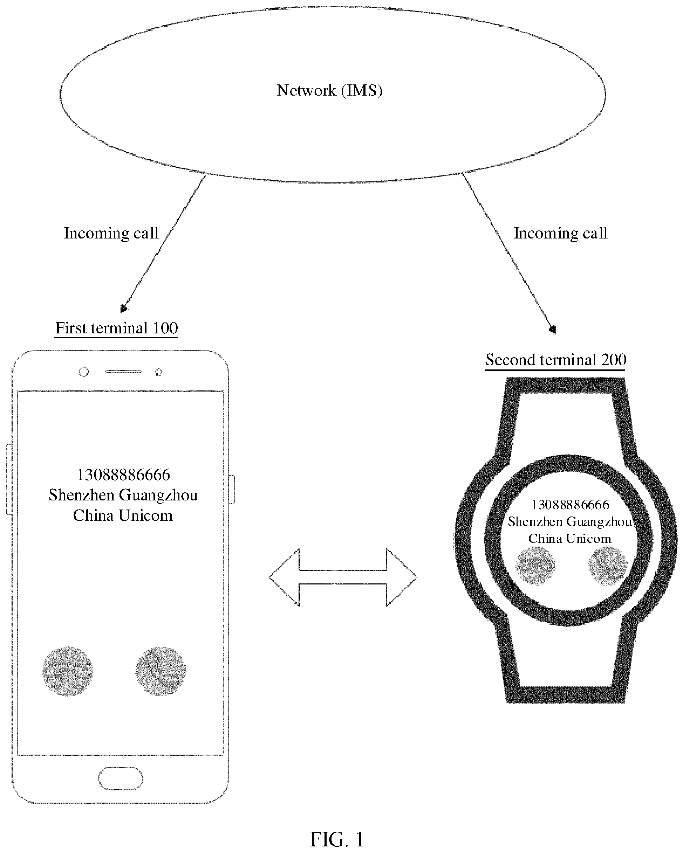

First, a scenario to which an embodiment of this application can be applied is described with reference to FIG. 1. FIG. 1 is a schematic diagram of a scenario to which an embodiment of this application can be applied. As shown in FIG. 1, a first terminal 100 and a second terminal 200 are two associated terminals that use a one-number dual-terminal service. The first terminal 100 may be a primary terminal, and the second terminal 200 may be an auxiliary terminal. In addition, both the first terminal 100 and the second terminal 200 present a same number to the outside (that is, share a same number) regardless of whether the first terminal 100 and the second terminal 200 serve as a calling party or a called party. FIG. 1 shows a case in which both the first terminal 100 and the second terminal 200 receive, from a network, an incoming call for the same number when the first terminal 100 and the second terminal 200 serve as a called party. The network may include an internet protocol multimedia subsystem (IP Multimedia Subsystem, IMS) (shown in the figure). The network may further include an access network, for example, an access network that includes one or more base stations, or a core network (not shown in the figure).

The first terminal 100 may be any terminal that can make a call with another terminal by using a wireless communication network (for example, a 5G network). The first terminal 100 may have a subscriber identity module (Subscriber Identification Module, SIM) card interface to insert a SIM card into the first terminal 100, and make a call with another terminal by using the SIM card. Alternatively, the first terminal 100 may make a call with another terminal by using an embedded SIM (embedded SIM, eSIM) card.

The second terminal 200 may be any terminal that has a call function and the like of the first terminal 100.

Both the first terminal 100 and the second terminal 200 may be but are not limited to a mobile or fixed terminal such as a mobile phone, a wearable device (for example, a watch or a band), a tablet computer, a notebook computer, an ultra-mobile personal computer (Ultra-Mobile Personal Computer, UMPC), a handheld computer, and a personal digital assistant (Personal Digital Assistant, PDA). The first terminal 100 and the second terminal 200 may communicate with each other in a wired or wireless manner. The wireless manner includes communication manners such as Bluetooth and wireless fidelity (Wireless Fidelity, WIFI).

This embodiment of this application is described below by using an example in which the first terminal 100 is a mobile phone and the second terminal 200 is a wearable watch. In an example in which the first terminal 100 is a mobile phone and the second terminal 200 is a wearable watch, a number shared by the first terminal 100 and the second terminal 200 may be a mobile phone number corresponding to SIM in the first terminal 100.

In this embodiment of this application, when the mobile phone number is called, both the first terminal 100 and the second terminal 200 ring as a called terminal. When a simultaneous ringing mode is used for ringing, the first terminal 100 and the second terminal 200 simultaneously ring. In other words, the simultaneous ringing mode means that when the mobile phone number is called, both the first terminal 100 and the second terminal 200 basically simultaneously ring as a called terminal. "Basically" may be understood as that a difference between ringing start times of the first terminal 100 and the second terminal 200 is less than a threshold. In addition, in response to the incoming call, the first terminal 100 and the second terminal 200 display information (for example, one or more of a mobile phone number corresponding to the incoming call and corresponding home region information) related to the incoming call. For example, as shown in FIG. 1, when a user uses a mobile phone number "13088886666" to call a mobile phone number shared by the first terminal 100 and the second terminal 200, both the first terminal 100 and the second terminal 200 serve as a called terminal, and display the mobile phone number "13088886666," a hang-up icon (an icon in a lower left corner of a display interface in FIG. 1), and an answer icon (an icon in a lower right corner of the display interface in FIG. 1).

In this embodiment of this application, after detecting an incoming call rejection instruction entered by the user, either of the first terminal 100 and the second terminal 200 may reject the incoming call, and indicate the other terminal to also reject the incoming call. For example, after detecting the incoming call rejection instruction entered by the user, the first terminal 100 can reject the incoming call, and indicate the second terminal 200 to also reject the incoming call; or after detecting the incoming call rejection instruction entered by the user, the second terminal 200 can reject the incoming call, and indicate the first terminal 100 to also reject the incoming call. In this embodiment of this application, the following case is avoided: After the user rejects a call on one of two associated terminals that use a one-number dual-terminal service, the other terminal continues to ring to disturb the user. This improves user experience.

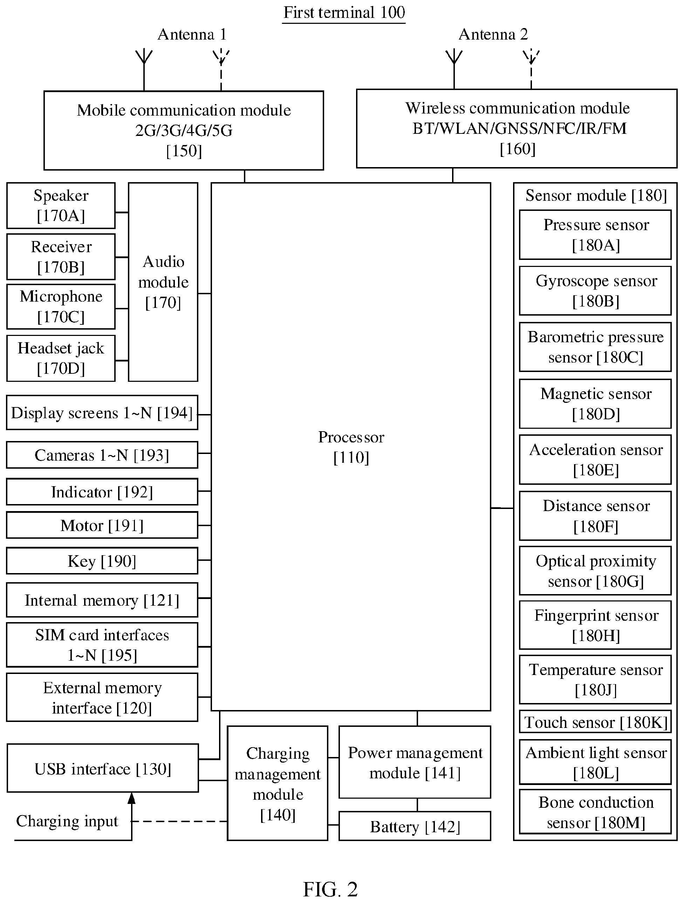

FIG. 2 is a schematic diagram of a hardware structure of a first terminal 100 in two associated terminals that use a one-number dual-terminal service according to an embodiment of this application. As shown in FIG. 2, the first terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a SIM card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in FIG. 2 does not constitute a specific limitation on the first terminal 100. In another embodiment of this application, the first terminal 100 may include more or fewer components than shown in the figure, or combine some components, or split some components, or have different component arrangements. The components shown in the figure may be implemented by using hardware, software, or a combination of software and hardware.

The processor 110 may include one or more processing units. For example, the processor 110 may include an application processor (Application Processor, AP), a modem (Modem), a graphics processing unit (Graphics Processing Unit, GPU), an image signal processor (Image Signal Processor, ISP), a controller, a video codec, a digital signal processor (Digital Signal Processor, DSP), a baseband processor, a neural-network processing unit (Neural-network Processing Unit, NPU), and/or the like. Different processing units may be independent devices, or may be integrated into one or more processors.

The charging management module 140 is configured to receive charging input from a charger. The charger may be a wireless charger, or may be a wired charger.

The power management module 141 is configured to connect to the battery 142, the charging management module 140, and the processor 110. The power management module 141 receives input of the battery 142 and/or the charging management module 140, and supplies power to the processor 110, the internal memory 121, the display screen 194, the camera 193, the wireless communication module 160, and the like.

A wireless communication function of the first terminal 100 may be implemented by using the antenna 1, the antenna 2, the mobile communication module 150, the wireless communication module 160, the modem, the baseband processor, and the like.

The antenna 1 and the antenna 2 are configured to transmit and receive an electromagnetic wave signal. Each antenna in the first terminal 100 may be configured to cover a single communication band or a plurality of communication bands. Different antennas may be further multiplexed to improve antenna utilization.

The mobile communication module 150 may provide a solution to wireless communication including 2G/3G/4G/5G applied to the first terminal 100.

The wireless communication module 160 may provide a solution to wireless communication including a wireless local area network (Wireless Local Area Networks, WLAN) (such as a Wi-Fi network), Bluetooth (BlueTooth, BT), a global navigation satellite system (Global Navigation Satellite System, GNSS), frequency modulation (Frequency Modulation, FM), a near field communication (Near Field Communication, NFC) technology, an infrared technology, and the like applied to the first terminal 100. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation by using the antenna 2.

In some embodiments, in an example in which the wireless communication module 160 provides Bluetooth communication, the wireless communication module 160 may be specifically a Bluetooth chip. The Bluetooth chip may include one or more memories, one or more processors, and the like. The processor in the Bluetooth chip may perform operations such as frequency modulation, filtering, operation, and determining on the electromagnetic wave received by using the antenna 2, and convert a processed signal into an electromagnetic wave for radiation by using the antenna 2, that is, no processing needs to be performed by the processor 110.

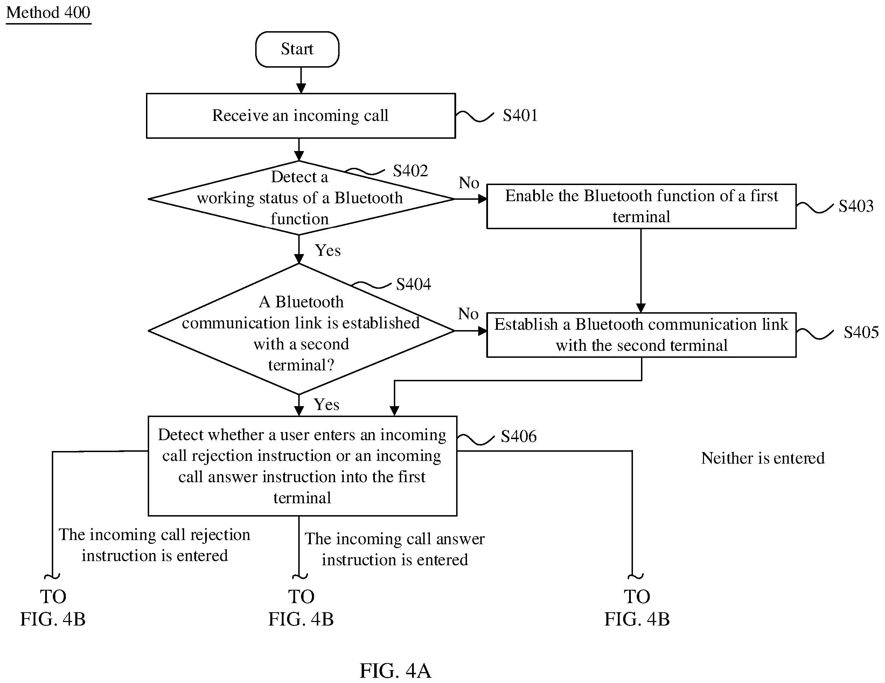

The wireless communication module 160 or the processor 110 may perform steps performed by the first terminal in a method for responding to an incoming call provided in the embodiments of this application. For details, refer to related descriptions of the first terminal in FIG. 4A and FIG. 4B, FIG. 6A and FIG. 6B, and FIG. 7. Details are not described herein again.

The first terminal 100 implements a display function by using the GPU, the display screen 194, the application processor, and the like. The GPU is a microprocessor for image processing, and is connected to the display screen 194 and the application processor.

The display screen 194 is configured to display an image, a video, or the like, The display screen 194 of the first terminal 100 may display a series of graphical user interfaces (Graphical User Interface, GUI).

The electronic device 200 may implement a photographing function by using the ISP, the camera 193, the video codec, the GPU, the display screen 194, the application processor, and the like.

The camera 193 is configured to capture a still image or a video.

The external memory interface 120 may be configured to connect an external storage card, for example, a Micro SD card, to expand a storage capacity of the electronic device 200.

The internal memory 121 may be configured to store computer-executable program code, and the executable program code includes instructions. The processor 110 performs various function applications and data processing of the first terminal 100 by running the instructions stored in the internal memory 121.

The first terminal 100 may implement an audio function, such as music playing and recording, by using the audio module 170, the speaker 170A, the receiver 170B, the microphone 170C, the headset jack 170D, the application processor, and the like.

The SIM card interface 195 is configured to connect to a SIM card. The SIM card may be inserted into the SIM card interface 195 or removed from the SIM card interface 195 to implement contact with or separation from the first terminal 100. The first terminal 100 may support one or N SIM card interfaces, where N is a positive integer greater than 1. The SIM card interface 195 may support a Nano SIM card, a Micro SIM card, a SIM card, and the like. A plurality of cards may be simultaneously inserted into a same SIM card interface 195. The SIM card interface 195 may be further compatible with the external memory card. The first terminal 100 interacts with a network by using a SIM card to implement functions such as calling and data communication.

On the foregoing components, an operating system runs, for example, a Harmony operating system, an iOS operating system, an Android operating system, or a Windows (windows) operating system. An application can be installed and run on the operating system. In some other embodiments, there may be a plurality of operating systems running in the first terminal 100.

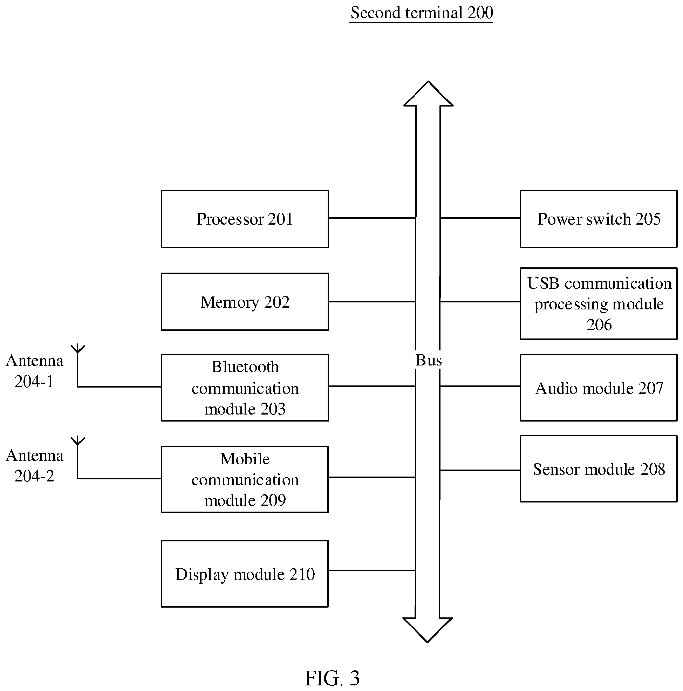

FIG. 3 is a schematic diagram of a hardware structure of a second terminal 200 in two associated terminals that use a one-number dual-terminal service according to an embodiment of this application. As shown in FIG. 3, the second terminal 200 may include a processor 201, a memory 202, a Bluetooth communication module 203, an antenna 204-1, an antenna 204-2, a power switch 205, a USB communication processing module 206, an audio module 207, a sensor module 208, a mobile communication module 209, and a display module 210. In addition to the modules shown in the figure, the second terminal 200 may further include another module such as a motor.

The processor 201 may be configured to read and execute computer-readable instructions. The processor 201 may include a controller, an arithmetic unit, a register, and the like. The controller may be responsible for decoding an instruction, and sending a control signal for an operation corresponding to the instruction. The arithmetic unit may be responsible for storing a register operand and an intermediate operation result that are temporarily stored during instruction execution. A hardware architecture of the processor 201 may be an application-specific integrated circuit (Application Specific Integrated Circuit, ASIC) architecture, a microprocessor without interlocked pipeline stages (Microprocessor without Interlocked Pipeline Stages, MIPS) architecture, an advanced reduced instruction set computing machines (Advanced RISC Machine, ARM) architecture, a network processor (Network Processor, NP) architecture, or the like.

In some embodiments, the processor 201 may be configured to parse a signal received by the Bluetooth communication module 203, for example, a request, a command, or a heartbeat packet that is sent by the first device 100. The processor 201 may be configured to perform a corresponding processing operation based on a parsing result, for example, generate a response corresponding to a request or a response corresponding to a command.

In addition, the processor 201 may be further configured to parse a signal received by the mobile communication module 209, for example, an incoming call sent by a network to the second terminal 200. The processor 201 may be configured to perform a corresponding processing operation based on a parsing result, for example, generate a response for an incoming call.

The memory 202 is coupled to the processor 201, and is configured to store various software programs and/or a plurality of groups of instructions. In specific implementation, the memory 202 may include a high-speed random access memory, and may also include a nonvolatile memory, for example, one or more magnetic disk storage devices, a flash memory device, or another nonvolatile solid-state storage device. The memory 202 may store an operating system, for example, an embedded operating system such as uCOS, VxWorks, or RTLinux. The memory 202 may further store a communication program. The communication program may be configured to communicate with the first terminal 100, one or more servers, or another terminal.

The Bluetooth communication module 203 may include a classic Bluetooth (BR/EDR) module and a Bluetooth low energy (BLE) module. The Bluetooth communication module 203 may be specifically a Bluetooth chip. The Bluetooth chip may include one or more memories, one or more processors, and the like. The processor in the Bluetooth chip may perform operations such as frequency modulation, filtering, operation, and determining on the electromagnetic wave received by using the antenna 204-1, and convert a processed signal into an electromagnetic wave for radiation by using the antenna 204-1, that is, no processing needs to be performed by the processor 201.

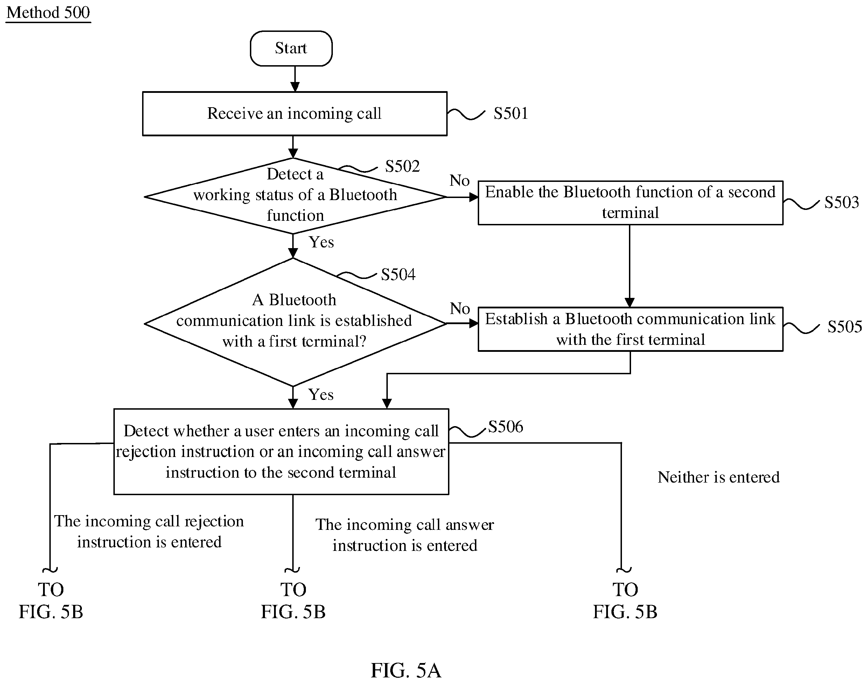

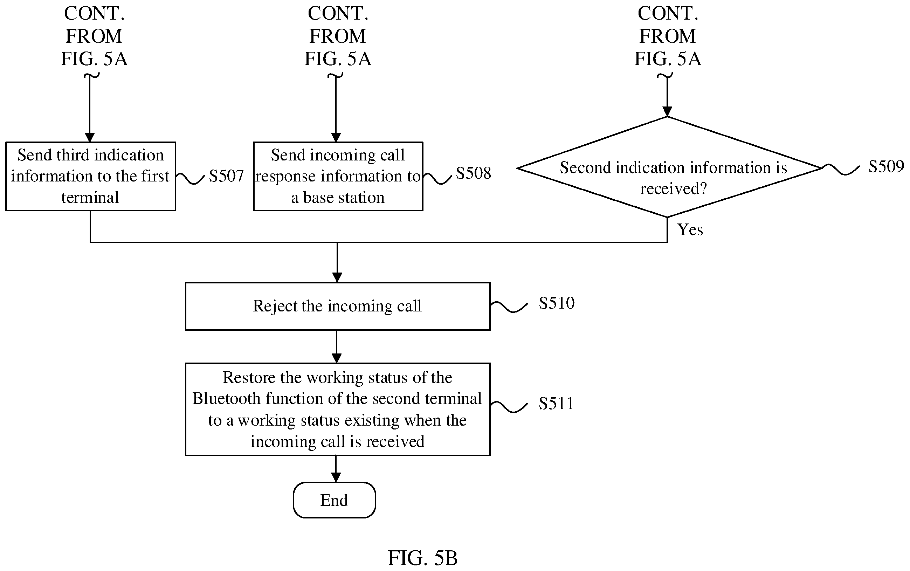

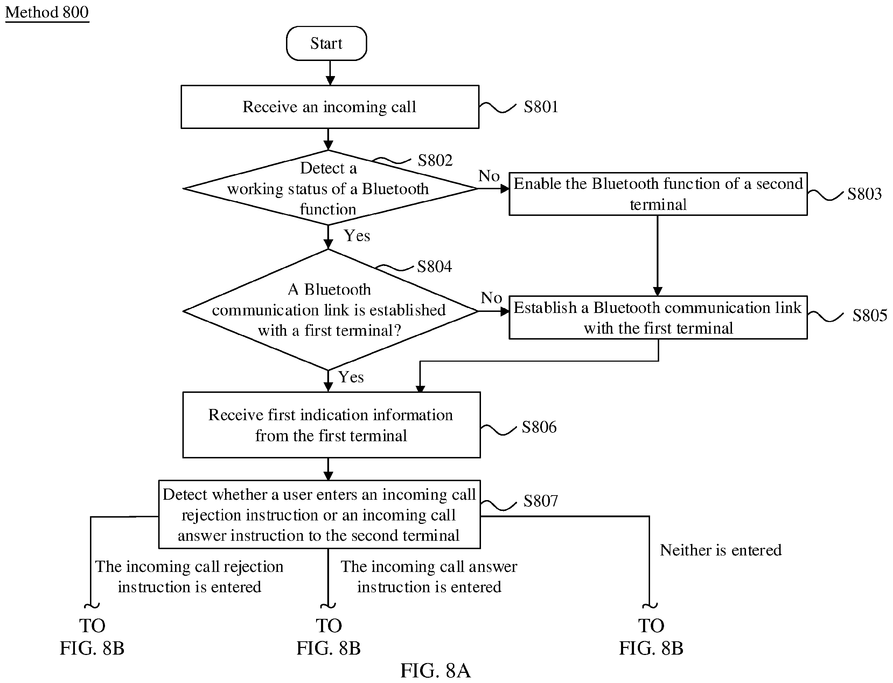

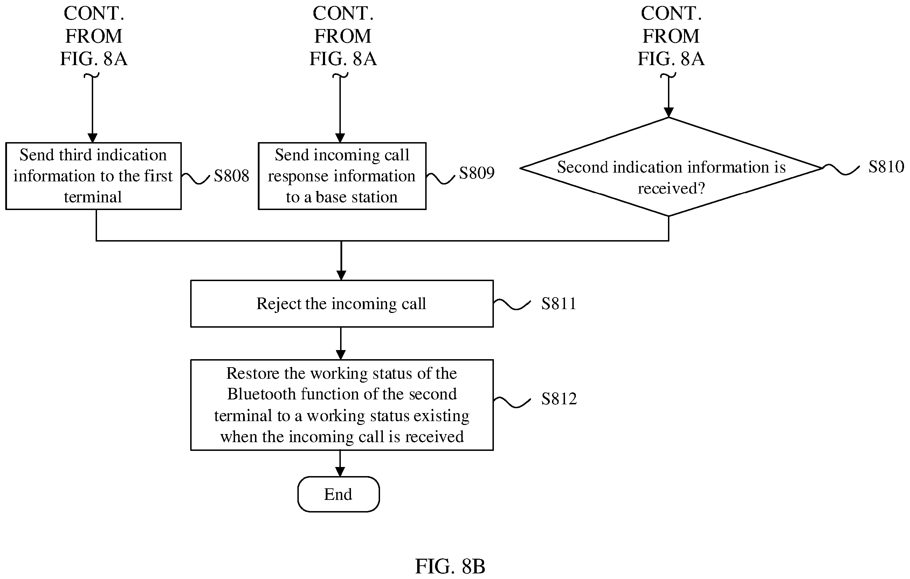

In some embodiments, the Bluetooth communication module 203, the mobile communication module 209, or the processor 201 may perform steps performed by the second terminal 200 in a method for responding to an incoming call provided in the embodiments of this application. For details, refer to related descriptions of the second terminal 200 in FIG. 5A, FIG. 5B, FIG. 8A, and FIG. 8B. Details are not described herein again.

A wireless communication function of the second terminal 200 may be implemented by using the antenna 204-1, the antenna 204-2, the Bluetooth communication module 203, the mobile communication module 209, the modem, and the like.

The antenna 204-1 or 204-2 may be configured to transmit and receive an electromagnetic wave signal. Each antenna in the second terminal 200 may be configured to cover a single communication band or a plurality of communication bands.

The power switch 205 may be configured to control a power supply to supply power to the second terminal 200.

The USB communication processing module 206 may be configured to communicate with another terminal through a USB interface (not shown).

The audio module 207 may be configured to output an audio signal through an audio output interface, so that the second terminal 200 supports audio playing. The audio module may be further configured to receive audio data through an audio input interface.

The sensor module 208 may include one or more sensors, for example, an acceleration sensor and a gyroscope sensor.

The mobile communication module 209 may provide a solution to wireless communication including 2G/3G/4G/5G applied to the second terminal 200.

The display module 210 is configured to display an image, a video, or the like, The display module 210 of the second terminal 200 may display series of graphical user interfaces (Graphical User Interface, GUI) such as an answer icon and a hang-up icon for an incoming call.

It may be understood that the structure shown in FIG. 3 does not constitute a specific limitation on the second terminal 200. In another embodiment of this application, the second terminal 200 may include more or fewer components than shown in the figure, or combine some components, or split some components, or have different component arrangements. The components shown in the figure may be implemented by using hardware, software, or a combination of software and hardware.

In another embodiment of this application, the structure of the first terminal 100 may be shown in FIG. 3, and the structure of the second terminal 200 may be shown in FIG. 2. This is not limited in this embodiment of this application.

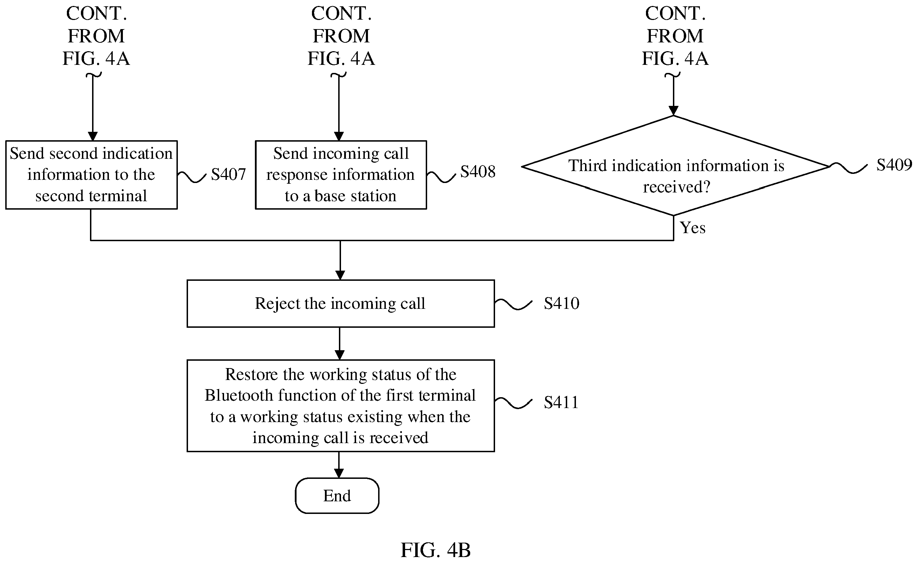

With reference to FIG. 4A, FIG. 4B, FIG. 5A, and FIG. 5B, the following describes a flowchart of a method for responding to an incoming call for two associated terminals that use a one-number dual-terminal service according to an embodiment of this application.

FIG. 4A and FIG. 4B are a flowchart of a method 400 for responding to an incoming call for two associated terminals that use a one-number dual-terminal service according to an embodiment of this application. The "two associated terminals that use a one-number dual-terminal service" mentioned herein may be the first terminal 100 and the second terminal 200 that are described above. The method 400 is performed by the first terminal 100. The method 400 may include step S401 to step S411.

Specifically, in step S401, the first terminal 100 receives an incoming call.

In an example of this embodiment of this application, the first terminal 100 and the second terminal 200 basically simultaneously receive an incoming call for a mobile phone number shared by the first terminal 100 and the second terminal 200. When receiving the incoming call, the first terminal 100 and the second terminal 200 may basically simultaneously ring.

In addition, in response to the incoming call, the first terminal 100 and the second terminal 200 may display information (for example, one or more of a mobile phone number corresponding to the incoming call and corresponding home region information) related to the incoming call.

In step S402, the first terminal 100 detects a working status of a Bluetooth function of the first terminal 100.

In an example of this embodiment of this application, the working status of the Bluetooth function may include the following: The Bluetooth function is enabled and the Bluetooth function is not enabled. When detecting that the Bluetooth function of the first terminal 100 is not enabled, the first terminal 100 may perform step S403. When detecting that the Bluetooth function of the first terminal 100 is enabled, the first terminal 100 may directly perform step S404.

In step S403, the first terminal 100 enables the Bluetooth function of the first terminal 100. For example, the first terminal 100 may enable the Bluetooth function of the first terminal 100 in a conventional Bluetooth function enabling manner. This is not limited in this application. After step S403, the first terminal 100 may perform step S405.

In step S404, the first terminal 100 determines whether the first terminal 100 establishes a Bluetooth communication link with the second terminal 200. When the first terminal 100 determines that the first terminal 100 does not establish a Bluetooth communication link with the second terminal 200, the first terminal performs step S405. When the first terminal 100 determines that the first terminal 100 establishes a Bluetooth communication link with the second terminal 200, the first terminal performs step S406.

In step S405, the first terminal 100 establishes a Bluetooth communication link with the second terminal 200. For example, the first terminal 100 may establish a Bluetooth communication link between the first terminal 100 and the second terminal 200 by using a conventional Bluetooth communication link establishment method. For example, in an example in which the first terminal 100 serves as a primary device for Bluetooth communication and the second terminal 200 serves as a secondary device for Bluetooth communication, the second terminal 200 may be in a Bluetooth advertising state. After receiving Bluetooth advertising from the second terminal 200, the first terminal 100 sends a scanning request to the second terminal 200. After receiving the scanning request, the second terminal 200 feeds back response information to the first terminal 100. Then, the first terminal 100 sends a connection request to the second terminal 200, and performs pairing and binding with the second terminal 200, to establish a Bluetooth communication link with the second terminal 200.

After performing step S405, the first terminal may perform step S406.

In step S406, the first terminal 100 detects whether a user enters an incoming call rejection instruction or an incoming call answer instruction into the first terminal 100.

In an example of this embodiment of this application, when the first terminal 100 receives the incoming call, a display screen of the first terminal 100 may display a hang-up icon and an answer icon. The user may touch or tap the hang-up icon to enter the incoming call rejection instruction into the first terminal 100. Alternatively, the user may touch or tap the answer icon to enter the incoming call answer instruction into the first terminal 100.

In this example, the first terminal 100 may determine, by detecting whether the hang-up icon is touched or tapped, whether the incoming call rejection instruction of the user is entered into the first terminal 100. Specifically, when the first terminal 100 detects that the hang-up icon is touched or tapped, the first terminal 100 can determine that the incoming call rejection instruction of the user is entered into the first terminal 100. In this case, the first terminal 100 performs step S407. In addition, the incoming call rejection instruction may also be a voice instruction. For example, the user may enter a hang-up instruction through a voice recognition interface.

In addition, in this example, the first terminal 100 may determine, by detecting whether the answer icon is touched or tapped, whether the incoming call answer instruction of the user is entered into the first terminal 100. Specifically, when the first terminal 100 detects that the answer icon is touched or tapped, the first terminal 100 can determine that the incoming call answer instruction of the user is entered into the first terminal 100. In this case, the first terminal 100 performs step S408.

In addition, when the first terminal 100 detects neither the incoming call rejection instruction nor the incoming call answer instruction, the first terminal 100 may perform step S409 to determine whether the first terminal 100 receives a third indication message from the second terminal 200. If a determining result of step S409 is that the first terminal 100 receives the third indication message from the second terminal 200, the first terminal 100 performs step S410. If a determining result of step S409 is that the first terminal 100 does not receive the third indication message from the second terminal 200, the first terminal 100 may ring based on a ringing time that is set in an existing incoming call procedure, and stop ringing after the ringing time expires (not shown in the figure).

In step S407, the first terminal 100 sends second indication information to the second terminal 200. The second indication information is used to indicate the second terminal 200 to reject the incoming call. For example, the second indication information may include an instruction for hanging up a current incoming call. In addition, the second indication information may further include one or more of an incoming call number, a mobile phone number shared by the first terminal 100 and the second terminal 200, location information of the first terminal 100, and the like.

In step S408, the first terminal 100 sends incoming call response information to a base station. The incoming call response information may be an answer message in a conventional incoming call answer procedure.

In step S409, the first terminal 100 determines whether the first terminal 100 receives the third indication information from the second terminal 200. The third indication information is sent to the first terminal 100 when the second terminal 200 detects that an incoming call rejection instruction is entered into the second terminal 200. The third indication information is used to indicate the first terminal 100 to reject the incoming call. For example, the third indication information may include an instruction for hanging up a current incoming call. In addition, the third indication information may further include one or more of an incoming call number, a mobile phone number shared by the first terminal 100 and the second terminal 200, location information of the second terminal 200, and the like.

After step S407 or when the determining result of step S409 is yes, the first terminal 100 may perform step S410 and step S411.

In step S410, the first terminal 100 rejects the incoming call.

In an example of this embodiment of this application, that the first terminal 100 rejects the incoming call may be stopping an incoming call reminder (for example, the first terminal 100 stops ringing or vibrating, or an auxiliary device such as a headset of the first terminal 100 stops ringing), and sending incoming call response information to the base station. The incoming call response information may be a cancel (cancel) message in an incoming call hang-up procedure.

In another example of this embodiment of this application, step S410 and step S407 may be simultaneously performed, or step S410 may be performed before step S407.

In step S411, the first terminal 100 may restore the working status of the Bluetooth function of the first terminal 100 to a working status existing when the incoming call is received.

For example, when the incoming call is received, if the working status of the Bluetooth function of the first terminal 100 is that the Bluetooth function is not enabled, the first terminal 100 may disable the Bluetooth function of the first terminal 100 in step S411. It should be understood that, when the incoming call is received, if the working status of the Bluetooth function of the first terminal 100 is that the Bluetooth function is enabled, the first terminal 100 may not perform step S411.

In this embodiment of this application, information may be exchanged between the first terminal 100 and the second terminal 200 by using a Bluetooth communication link. For example, the first terminal 100 may send the second indication information to the second terminal 200 by using a Bluetooth communication link, or receive the third indication information from the second terminal 200 by using a Bluetooth communication link.

FIG. 5A and FIG. 5B are a flowchart of another method 500 for responding to an incoming call for two associated terminals that use a one-number dual-terminal service according to an embodiment of this application. The "two associated terminals that use a one-number dual-terminal service" mentioned herein may be the first terminal 100 and the second terminal 200 that are described above. The method 500 is performed by the second terminal 200. The method 500 is similar to the method 400, and may include step S501 to step S511.

Specifically, in step S501, the second terminal 200 receives an incoming call. For an execution principle and a process of step S501, refer to step S401. Details are not described herein again.

In step S502, the second terminal 200 detects a working status of a Bluetooth function of the second terminal 200. For an execution principle and a process of step S502, refer to step S402. Details are not described herein again.

When detecting that the Bluetooth function of the second terminal 200 is not enabled, the second terminal 200 may perform step S503. When detecting that the Bluetooth function of the second terminal 200 is enabled, the second terminal 200 may directly perform step S504.

In step S503, the second terminal 200 enables the Bluetooth function of the second terminal 200. For an execution principle and a process of step S503, refer to step S403. Details are not described herein again. After step S503, the second terminal 200 may perform step S505.

In step S504, the second terminal 200 determines whether the second terminal 200 establishes a Bluetooth communication link with the first terminal 100. For an execution principle and a process of step S504, refer to step S404. Details are not described herein again. When the second terminal 200 determines that the second terminal 200 does not establish a Bluetooth communication link with the first terminal 100, the second terminal 200 performs step S505. When the second terminal 200 determines that the second terminal 200 establishes a Bluetooth communication link with the first terminal 100, the second terminal 200 performs step S506.

In step S505, the second terminal 200 establishes a Bluetooth communication link with the first terminal 100. For an execution principle and a process of step S505, refer to step S405. Details are not described herein again.

It should be understood that, in a process of establishing the Bluetooth communication link between the first terminal 100 and the second terminal 200, the first terminal 100 may serve as a primary device in Bluetooth communication, and the second terminal 200 may serve as a secondary device in Bluetooth communication. In this case, the first terminal 100 may perform step S405 based on an operation that is of the primary device and that is specified in an existing Bluetooth communication protocol, and the second terminal 200 may perform step S505 based on an operation that is of the secondary device and that is specified in the existing Bluetooth communication protocol.

Alternatively, in a process of establishing the Bluetooth communication link between the first terminal 100 and the second terminal 200, the first terminal 100 may serve as a secondary device in Bluetooth communication, and the second terminal 200 may serve as a primary device in Bluetooth communication. In this case, the first terminal 100 may perform step S405 based on an operation that is of the secondary device and that is specified in an existing Bluetooth communication protocol, and the second terminal 200 may perform step S505 based on an operation that is of the primary device and that is specified in the existing Bluetooth communication protocol.

After performing step S505, the second terminal 200 may perform step S506.

In step S506, the second terminal 200 detects whether a user enters an incoming call rejection instruction or an incoming call answer instruction into the second terminal 200. For an execution principle and a process of step S506, refer to step S406. Details are not described herein again.

When the second terminal 200 detects that a hang-up icon is touched or tapped, the second terminal 200 can determine that the incoming call rejection instruction of the user is entered into the second terminal 200. In this case, the second terminal 200 performs step S507.

When the second terminal 200 detects that an answer icon is touched or tapped, the second terminal 200 can determine that the incoming call answer instruction of the user is entered into the second terminal 200. In this case, the second terminal 200 performs step S508.

In addition, when the second terminal 200 detects neither the incoming call rejection instruction nor the incoming call answer instruction, the second terminal 200 may perform step S509 to determine whether the second terminal 200 receives a second indication message from the first terminal 100. If a determining result of step S509 is that the second terminal 200 receives the second indication message from the first terminal 100, the second terminal 200 performs step S510. If a determining result of step S509 is that the second terminal 200 does not receive the second indication message from the first terminal 100, the second terminal 200 may ring based on a ringing time that is set in an existing incoming call procedure, and stop ringing after the ringing time expires (not shown in the figure).

In step S507, the second terminal 200 sends third indication information to the first terminal 100.

In step S508, the second terminal 200 sends incoming call response information to a base station. For an execution principle and a process of step S508, refer to step S408. Details are not described herein again.

In step S509, the second terminal 200 determines whether the second terminal 200 receives the second indication information from the first terminal 100.

After step S507 or when the determining result of step S509 is yes, the second terminal 200 may perform step S510 and step S511.

In step S510, the second terminal 200 rejects the incoming call. For an execution principle and a process of step S510, refer to step S410. Details are not described herein again.

In another example of this embodiment of this application, step S510 and step S507 may be simultaneously performed, or step S510 may be performed before step S507.

In step S511, the second terminal 200 may restore the working status of the Bluetooth function of the second terminal 200 to a working status existing when the incoming call is received. For an execution principle and a process of step S511, refer to step S411. Details are not described herein again.

In the foregoing embodiment, when receiving an incoming call, both the first terminal 100 and the second terminal 200 detect whether respective Bluetooth functions are enabled and whether a Bluetooth communication link is established with a peer, to subsequently send, to the peer by using the Bluetooth communication link, indication information used to indicate the peer to hang up a current incoming call. In another embodiment of this application, the first terminal 100 and the second terminal 200 may exchange, in any wired communication manner or another wireless communication manner other than Bluetooth, the indication information used to indicate the peer to hang up the current incoming call. The wired communication manner is, for example, a communication manner in which a transmission medium such as a cable, an optical cable, or a waveguide is used. The wireless communication manner is, for example, a short-range communication manner such as wireless fidelity (Wireless Fidelity, WiFi), ZigBee (ZigBee), or near field communication (Near Field Communication, NFC).

When a distance between the first terminal 100 and the second terminal 200 is short, an operation in which the user refuses to answer an incoming call on one terminal indicates that it is currently inconvenient for the user to answer the incoming call or the user does not want to answer the incoming call. If the other terminal continues to ring, the user is disturbed, and user experience is reduced. This application provides another embodiment, that is, when the distance between the first terminal 100 and the second terminal 200 meets a preset level, after detecting the incoming call rejection instruction entered by the user, either of the first terminal 100 and the second terminal 200 may reject the incoming call, and indicate the other terminal to also reject the incoming call.

Specifically, when the distance between the first terminal 100 and the second terminal 200 meets the preset level, after detecting the incoming call rejection instruction entered by the user, the first terminal 100 can reject the incoming call, and indicate the second terminal 200 to also reject the incoming call; or after detecting the incoming call rejection instruction entered by the user, the second terminal 200 can reject the incoming call, and indicate the first terminal 100 to also reject the incoming call. In this embodiment, the following case is avoided: When the distance between the first terminal 100 and the second terminal 200 is short, and after the user rejects to answer a call on one terminal, the other terminal continues to ring to disturb the user. This improves user experience.

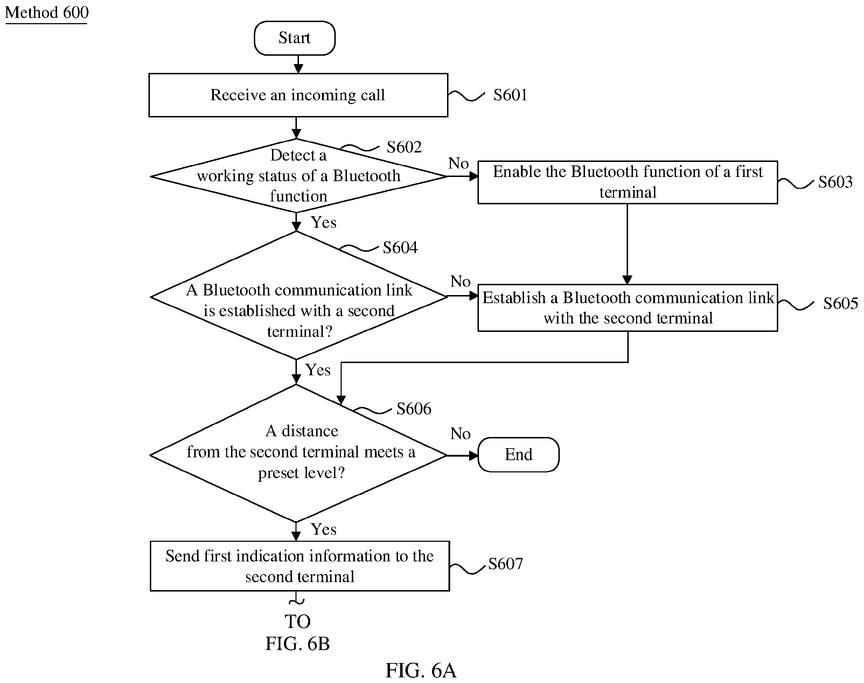

The following describes specific implementations of this embodiment with reference to FIG. 6A-FIG. 8B.

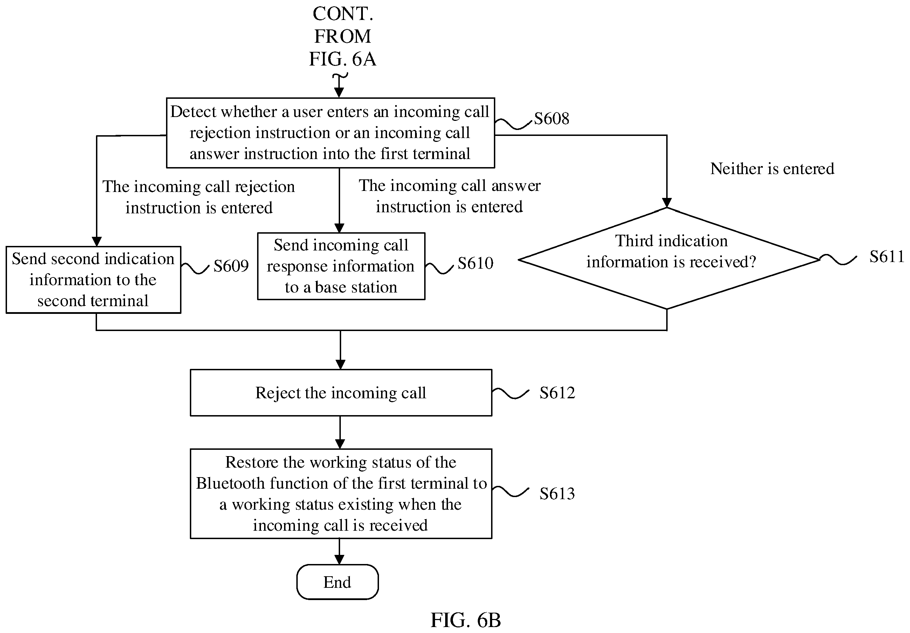

FIG. 6A and FIG. 6B are a flowchart of a method 600 for responding to an incoming call for two associated terminals that use a one-number dual-terminal service according to another embodiment of this application. The "two associated terminals that use a one-number dual-terminal service" mentioned herein may be the first terminal 100 and the second terminal 200 that are described above. The method 600 is performed by the first terminal 100. The method 600 may include step S601 to step S612.

Specifically, in step S601, the first terminal 100 receives an incoming call. For an execution principle and a process of step S601, refer to step S401. Details are not described herein again.

In step S602, the first terminal 100 detects a working status of a Bluetooth function of the first terminal 100. For an execution principle and a process of step S602, refer to step S402. Details are not described herein again.

When detecting that the Bluetooth function of the first terminal 100 is not enabled, the first terminal 100 may perform step S603. When detecting that the Bluetooth function of the first terminal 100 is enabled, the first terminal 100 may directly perform step S604.

In step S603, the first terminal 100 enables the Bluetooth function of the first terminal 100. For an execution principle and a process of step S603, refer to step S403. Details are not described herein again. After step S603, the first terminal 100 may perform step S605.

In step S604, the first terminal 100 determines whether the first terminal 100 establishes a Bluetooth communication link with the second terminal 200. When the first terminal 100 determines that the first terminal 100 does not establish a Bluetooth communication link with the second terminal 200, the first terminal performs step S605. When the first terminal 100 determines that the first terminal 100 establishes a Bluetooth communication link with the second terminal 200, the first terminal performs step S606.

In step S605, the first terminal 100 establishes a Bluetooth communication link with the second terminal 200. For an execution principle and a process of step S605, refer to step S405. Details are not described herein again.

In step S606, the first terminal 100 determines whether a distance between the first terminal 100 and the second terminal 200 meets a preset level. The preset level may indicate that the distance between the first terminal 100 and the second terminal 200 is short enough.

The first terminal 100 may determine, based on one or more factors, whether the distance between the first terminal 100 and the second terminal 200 meets the preset level. The one or more factors include, for example, whether the first terminal 100 and the second terminal 200 have a same serving cell, whether the first terminal 100 and the second terminal 200 are in a same local area network, whether the distance (for example, one or more of a horizontal distance, a vertical distance, and a linear distance) between the first terminal 100 and the second terminal 200 meets a preset condition, and whether the first terminal 100 and the second terminal 200 are in a Wi-Fi direct state.

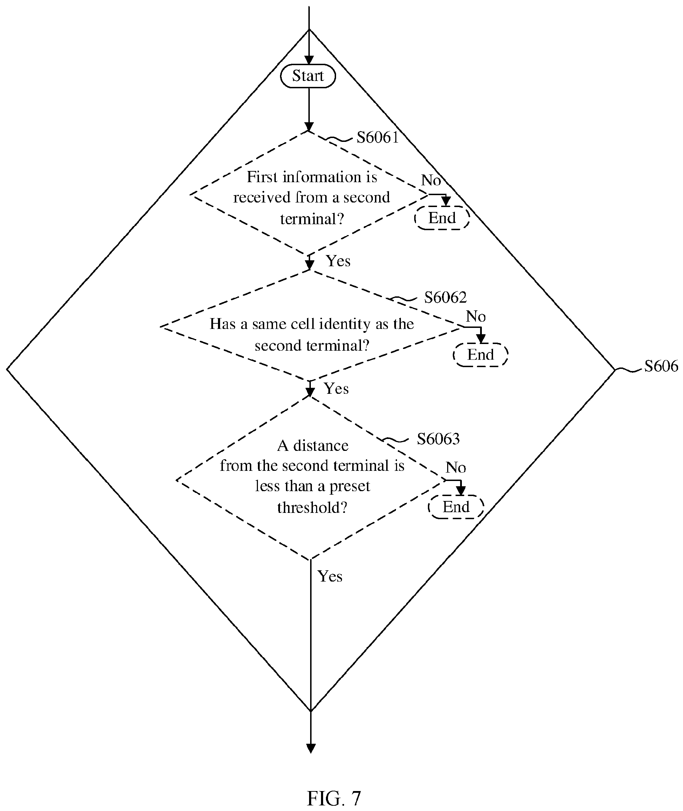

The first terminal 100 may select one or more of the foregoing factors for different scenarios to determine whether the distance between the first terminal 100 and the second terminal 200 meets the preset level. For example, for a scenario in which the first terminal 100 and the second terminal 200 may be located in coverage of a same cell (for example, a small cell (small cell), a micro cell (micro cell), a pico cell (pico cell), or a femto cell (femto cell)), the first terminal 100 may determine, based on whether the first terminal 100 and the second terminal 200 have a same serving cell and whether the distance between the first terminal 100 and the second terminal 200 meets a threshold, whether the distance between the first terminal 100 and the second terminal 200 meets the preset level. The following describes step S606 with reference to FIG. 7.

Step S606 may include a plurality of substeps. For example, FIG. 7 is a flowchart in which a first terminal 100 determines whether a distance between the first terminal 100 and a second terminal 200 meets a preset level according to an embodiment of this application. As shown in FIG. 7, step S606 includes three substeps: step S6061, step S6062, and step S6063.

Specifically, in step S6061, the first terminal 100 determines (for example, determines) whether first information is received from the second terminal 200. The first information includes an identity (cell ID) of a cell to which the second terminal belongs. The "cell to which the second terminal belongs" mentioned herein may be a serving cell of the second terminal.

In an example of this embodiment of this application, the first information may further include location information of the second terminal 200, for example, a longitude and a latitude of a geographic region to which the second terminal 200 belongs.

When the first terminal 100 receives the first information sent by the second terminal 200, it indicates that the first terminal 100 and the second terminal 200 are in a distance range in which Bluetooth communication can be performed. In this case, the first terminal 100 performs step S6062. For Bluetooth communication of a citizen version, the distance range may be 8~30 meters. For Bluetooth communication of commercial and industrial versions, the distance range may be 80~100 meters.

When the first terminal 100 does not receive the first information sent by the second terminal 200, it indicates that the first terminal 100 and the second terminal 200 are not in a distance range in which Bluetooth communication can be performed. Therefore, if the distance between the first terminal 100 and the second terminal 200 is not short enough and does not meet the preset level, the method 600 ends.

In step S6062, the first terminal 100 determines (for example, determines) whether the first terminal 100 and the second terminal 200 have a same cell identity. When the first terminal 100 and the second terminal 200 have a same cell identity, the first terminal 100 performs step S6063. When the first terminal 100 and the second terminal 200 do not have a same cell identity, it indicates that the distance between the first terminal 100 and the second terminal 200 does not meet the preset level. In this case, the method 600 ends.

In an example of this embodiment of this application, the first terminal 100 may have a plurality of serving cells, and/or the second terminal 200 may have a plurality of serving cells. In this case, provided that one of identities of the plurality of serving cells of the first terminal 100 is the same as one of identities the plurality of serving cell of the second terminal 200, the first terminal 100 performs step S6063, and it is not necessary that identities of all the serving cells of the first terminal 100 are totally the same as identities of all the serving cells of the second terminal 200.

In step S6063, the first terminal 100 determines (for example, determines) whether the distance between the first terminal 100 and the second terminal 200 is less than a preset threshold. The preset threshold may be a distance value for reliable Bluetooth communication between the first terminal 100 and the second terminal 200. The preset threshold is a value within the distance range that is described above and in which Bluetooth communication can be performed between the first terminal 100 and the second terminal 200. In an example in which the distance range is 8~30 meters, the preset threshold may be 10.

In an example of this embodiment of this application, the first terminal 100 may determine the distance between the first terminal 100 and the second terminal 200 by using any method that can be used to measure the distance between the first terminal 100 and the second terminal 200. For example, the first terminal 100 may determine the distance between the first terminal 100 and the second terminal 200 by using a conventional Bluetooth ranging method (for example, a Bluetooth ranging algorithm based on a received signal strength indicator (Received Signal Strength Indication, RSSI)), and then compare the determined distance with the preset threshold, to determine whether the distance between the first terminal 100 and the second terminal 200 is less than the preset threshold.

In an example of this embodiment of this application, when the distance between the first terminal 100 and the second terminal 200 is less than the preset threshold, the first terminal 100 determines that the distance between the first terminal 100 and the second terminal 200 meets the preset level. In this case, the first terminal 100 may perform step S607. When the distance between the first terminal 100 and the second terminal 200 is greater than or equal to the preset threshold, the first terminal 100 determines that the distance between the first terminal 100 and the second terminal 200 does not meet the preset level. In this case, the method 600 ends.

It should be understood that although the method 600 ends when the distance between the first terminal 100 and the second terminal 200 is greater than or equal to the preset threshold, the first terminal 100 and the second terminal 200 may perform a corresponding operation based on an incoming call answer or rejection procedure specified in an existing one-number dual-terminal service. For example, after the first terminal 100 rejects the incoming call, the second terminal 200 still rings.

Back to FIG. 6A and FIG. 6B, in step S607, the first terminal 100 sends first indication information to the second terminal 200. The first indication information is used to indicate that the distance between the first terminal 100 and the second terminal 200 meets the preset level. When receiving the first indication information, the second terminal 200 can determine that the distance between the second terminal 200 and the first terminal 100 meets the preset level. Based on an example of this embodiment of this application, the first terminal 100 may not perform step S607.

In step S608, the first terminal 100 detects whether a user enters an incoming call rejection instruction or an incoming call answer instruction into the first terminal 100. For an execution principle and a process of step S608, refer to step S406. Details are not described herein again.

When the first terminal 100 detects that a hang-up icon is touched or tapped, the first terminal 100 can determine that the incoming call rejection instruction of the user is entered into the first terminal 100. In this case, the first terminal 100 performs step S609.

When the first terminal 100 detects that an answer icon is touched or tapped, the first terminal 100 can determine that the incoming call answer instruction of the user is entered into the first terminal 100. In this case, the first terminal 100 performs step S610.

In addition, when the first terminal 100 detects neither the incoming call rejection instruction nor the incoming call answer instruction, the first terminal 100 may perform step S611 to determine whether the first terminal 100 receives a third indication message from the second terminal 200. If a determining result of step S611 is that the first terminal 100 receives the third indication message from the second terminal 200, the first terminal 100 performs step S612. If a determining result of step S611 is that the first terminal 100 does not receive the third indication message from the second terminal 200, the first terminal 100 may ring based on a ringing time that is set in an existing incoming call procedure, and stop ringing after the ringing time expires (not shown in the figure).

In step S609, the first terminal 100 sends second indication information to the second terminal 200. For an execution principle and a process of step S608, refer to step S407. Details are not described herein again.

In step S610, the first terminal 100 sends incoming call response information to a base station. For an execution principle and a process of step S610, refer to step S408. Details are not described herein again.

In step S611, the first terminal 100 determines whether the first terminal 100 receives the third indication information from the second terminal 200. For an execution principle and a process of step S611, refer to step S409. Details are not described herein again.

After step S609 or when the determining result of step S611 is yes, the first terminal 100 may perform step S612 and step S613.

In step S612, the first terminal 100 rejects the incoming call. For an execution principle and a process of step S612, refer to step S410. Details are not described herein again.

In another example of this embodiment of this application, step S612 and step S609 may be simultaneously performed, or step S612 may be performed before step S609.

In step S613, the first terminal 100 may restore the working status of the Bluetooth function of the first terminal 100 to a working status existing when the incoming call is received. For an execution principle and a process of step S613, refer to step S411. Details are not described herein again.

In the foregoing flowchart, the first terminal first determines whether the distance between the first terminal and the second terminal meets the preset level (that is, first performs step S606), and then determines whether the first terminal receives the third indication information from the second terminal (that is, then performs step S611). Based on another embodiment of this application, the first terminal may first determine whether the third indication information is received from the second terminal (that is, first perform step S611), and then determine whether the distance between the first terminal and the second terminal meets the preset level (that is, then perform step S606). For example, after the first terminal determines that the first terminal receives the third indication information from the second terminal, the first terminal may determine whether the distance between the first terminal and the second terminal meets the preset level, and reject the incoming call when the distance between the first terminal and the second terminal meets the preset level. In other words, even if the first terminal receives the third indication message from the second terminal, the first terminal may not reject the incoming call because the distance between the first terminal and the second terminal does not meet the preset level.

In addition, in this embodiment of this application, the first terminal may perform step S608 and step S610 after step S601.

FIG. 8A and FIG. 8B are a flowchart of another method 800 for responding to an incoming call for two associated terminals that use a one-number dual-terminal service according to another embodiment of this application. The "two associated terminals that use a one-number dual-terminal service" mentioned herein may be the first terminal 100 and the second terminal 200 that are described above. The method 800 is performed by the second terminal 200. The method 800 may include step S801 to step S810.

Specifically, in step S801, the second terminal 200 receives an incoming call. For an execution principle and a process of step S801, refer to step S501. Details are not described herein again.

In step S802, the second terminal 200 detects a working status of a Bluetooth function of the second terminal 200. For an execution principle and a process of step S802, refer to step S502. Details are not described herein again.

In step S803, the second terminal 200 enables the Bluetooth function of the second terminal 200. For an execution principle and a process of step S803, refer to step S503. Details are not described herein again. After step S803, the second terminal 200 may perform step S805.

In step S804, the second terminal 200 determines whether the second terminal 200 establishes a Bluetooth communication link with the first terminal 100. For an execution principle and a process of step S804, refer to step S504. Details are not described herein again. When the second terminal 200 determines that the second terminal 200 does not establish a Bluetooth communication link with the first terminal 100, the second terminal 200 performs step S805. When the second terminal 200 determines that the second terminal 200 establishes a Bluetooth communication link with the first terminal 100, the second terminal 200 performs step S806.

In step S805, the second terminal 200 establishes a Bluetooth communication link with the first terminal 100. For an execution principle and a process of step S805, refer to step S505. Details are not described herein again.

In step S806, the second terminal 200 receives first indication information from the first terminal 100. The first indication information is used to indicate that a distance between the first terminal 100 and the second terminal 200 meets a preset level. When receiving the first indication information, the second terminal 200 can determine that the distance between the second terminal 200 and the first terminal 100 meets the preset level.

In step S807, the second terminal 200 detects whether a user enters an incoming call rejection instruction or an incoming call answer instruction into the second terminal 200. For an execution principle and a process of step S807, refer to step S506. Details are not described herein again.

When the second terminal 200 detects that a hang-up icon is touched or tapped, the second terminal 200 can determine that the incoming call rejection instruction of the user is entered into the second terminal 200. In this case, the second terminal 200 performs step S808.

When the second terminal 200 detects that an answer icon is touched or tapped, the second terminal 200 can determine that the incoming call answer instruction of the user is entered into the second terminal 200. In this case, the second terminal 200 performs step S809.

In addition, when the second terminal 200 detects neither the incoming call rejection instruction nor the incoming call answer instruction, the second terminal 200 may perform step S810.

In step S808, the second terminal 200 sends third indication information to the first terminal 100. For an execution principle and a process of step S808, refer to step S507. Details are not described herein again.

In step S809 the second terminal 200 sends incoming call response information to a base station. For an execution principle and a process of step S809, refer to step S508. Details are not described herein again.

In step S810, the second terminal 200 determines whether the second terminal 200 receives second indication information from the first terminal 100. For an execution principle and a process of step S810, refer to step S509. Details are not described herein again.

After step S808 or when the determining result of step S810 is yes, the second terminal 200 may perform step S811 and step S812.

In step S811, the second terminal 200 rejects the incoming call. For an execution principle and a process of step S811, refer to step S510. Details are not described herein again.

In another example of this embodiment of this application, step S811 and step S808 may be simultaneously performed, or step S811 may be performed before step S808.

In step S812, the second terminal 200 may restore the working status of the Bluetooth function of the second terminal 200 to a working status existing when the incoming call is received. For an execution principle and a process of step S812, refer to step S511. Details are not described herein again.

In the foregoing embodiment, the first terminal 100 directly sends, to the second terminal 200 by using the Bluetooth communication link, the indication information used to hang up the current incoming call. In another embodiment of this application, the first terminal 100 may indirectly send, to the second terminal 200 by using the network, the indication information used to hang up the current incoming call. For example, the first terminal 100 may send, to the network, the indication information used to indicate the second terminal 200 to hang up the current incoming call, and then the network forwards the indication information to the second terminal 200. In addition, only when the distance between the first terminal 100 and the second terminal 200 meets the preset level, the first terminal may send, to the network, the indication information used to indicate the second terminal 200 to hang up the current incoming call, and then the network forwards the indication information to the second terminal 200. In still another embodiment of this application, when the network receives information that is from one of the first terminal 100 and the second terminal 200 and that is used to reject an incoming call, the network may send, to the other of the first terminal 100 and the second terminal 200, the indication information used to hang up the current incoming call. The other terminal that receives the indication information rejects the incoming call, for example, stops the incoming call reminder, and sends a cancel message in an incoming call hang-up procedure to the network. In still another embodiment of this application, when the network receives information that is from one of the first terminal 100 and the second terminal 200 and that is used to reject an incoming call or the network receives the indication information that is sent by one of the first terminal 100 and the second terminal 200 and that is used to indicate the other terminal to hang up the current incoming call, the network may stop calling the other of the first terminal 100 and the second terminal 200, for example, stop playing a ringing tone to the other terminal.

The foregoing embodiment can be applied to a scenario in which a same user has only one first terminal and only one second terminal, and the first terminal and the second terminal are two associated terminals that use a one-number dual-terminal service.

In actual application, the following scenario further exists: A same user has a plurality of terminals, where the first terminal and the second terminal are two associated terminals that use a one-number dual-terminal service. For example, a same user may have one mobile phone and a plurality of wearable watches, but the user subscribes to a one-number dual-terminal service only for the mobile phone and one of the plurality of wearable watches. In this case, the first terminal and the second terminal are respectively the mobile phone and the watch for which the one-number dual-terminal service has been subscribed. For this scenario, the foregoing embodiment may be transformed and/or modified. Specifically, in the foregoing embodiment, some steps may be added to ensure that the second terminal in the foregoing embodiment is a second terminal for which the one-number dual-terminal service has been subscribed, that is, it is determined that the second terminal is a terminal that has a SIM number the same as the first SIM number, instead of another terminal for which the one-number dual-terminal service is not subscribed.

Based on an example of this embodiment of this application, during subscription of the one-number dual-terminal service, the first terminal may store and record an identifier of a second terminal for which the one-number dual-terminal service has been subscribed. In the embodiment described with reference to FIG. 4A and FIG. 4B or FIG. 6A and FIG. 6B, after the first terminal receives the incoming call and establishes a Bluetooth communication link with the second terminal, the first terminal may determine, by using the identifier of the second terminal that establishes a Bluetooth communication link with the first terminal, whether the second terminal is a second terminal for which the one-number dual-terminal service has been subscribed. If the second terminal is a second terminal for which the one-number dual-terminal service has been subscribed, after detecting the incoming call rejection instruction entered by the user, the first terminal may send, to the second terminal, the indication information used to hang up the current incoming call.

In addition, in the embodiment described with reference to FIG. 5A and FIG. 5B or FIG. 8A and FIG. 8B, after the second terminal receives, from the first terminal, the indication information used to hang up the current incoming call, the second terminal may first determine whether the one-number dual-terminal service has been subscribed for the second terminal (for example, determine whether an eSIM card is mounted on the second terminal). If the one-number dual-terminal service has been subscribed for the second terminal, the second terminal rejects the incoming call based on the indication information. Alternatively, the second terminal may determine whether an incoming call number in the incoming call for the second terminal is the same as an incoming call number carried in the indication information. If the incoming call number in the incoming call for the second terminal is the same as the incoming call number carried in the indication information, the second terminal rejects the incoming call based on the indication information.

An embodiment of this application further provides a computer-readable storage medium. The computer-readable storage medium includes instructions, and when the instructions are run on an electronic device, the electronic device is enabled to perform the method steps related to the first terminal in FIG. 4A and FIG. 4B, FIG. 6A and FIG. 6B, and FIG. 7 or the method steps related to the second terminal in FIG. 5A, FIG. 5B, FIG. 8A, and FIG. 8B, to implement the method in the foregoing embodiment.

An embodiment of this application further provides a computer program product including instructions. When the computer program product runs on an electronic device, the electronic device is enabled to perform the method steps related to the first terminal in FIG. 4A and FIG. 4B, FIG. 6A and FIG. 6B, and FIG. 7 or the method steps related to the second terminal in FIG. 5A, FIG. 5B, FIG. 8A, and FIG. 8B, to implement the method in the foregoing embodiment.

An embodiment of this application further provides a terminal. The terminal includes a processor and a memory. The memory is configured to store computer program code. The computer program code includes computer instructions. When the processor executes the computer instructions, the terminal performs the method steps related to the first terminal in FIG. 4A and FIG. 4B, FIG. 6A and FIG. 6B, and FIG. 7 or the method steps related to the second terminal in FIG. 5A, FIG. 5B, FIG. 8A, and FIG. 8B, to implement the method in the foregoing embodiment. The terminal may be an integrated circuit IC or a system-on-chip SOC. The integrated circuit may be a general integrated circuit, a field programmable gate array FPGA, or an application-specific integrated circuit ASIC.

Based on the method for responding to an incoming call for two associated terminals that use a one-number dual-terminal service and the corresponding terminal in the embodiments of this application, after detecting an incoming call rejection instruction entered by the user, one of the two associated terminals can reject an incoming call, and indicate the other terminal to also reject the incoming call, thereby preventing the user from being disturbed, and improving user experience.

In the several embodiments provided in this application, it should be understood that the disclosed system, apparatus, and method may be implemented in other manners. For example, the described apparatus embodiment is merely an example. For example, the module or unit division is merely logical function division and may be another division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separated, and components displayed as units may or may not be physical units, that is, may be located in one place, or may be distributed on a plurality of network units. Some or all of the units may be selected based on actual requirements to achieve the objectives of the solutions of the embodiments.

In addition, the functional units in the embodiments of this application may be integrated into one processing unit, or each unit may exist alone physically, or two or more units may be integrated into one unit. The foregoing integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of the embodiments essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor to perform all or some of the steps of the methods described in the embodiments. The foregoing storage medium includes any medium that can store program code, for example, a flash memory, a removable hard disk, a read-only memory, a random access memory, a magnetic disk, or an optical disc.

The foregoing descriptions are merely specific implementations of this application, but are not intended to limit the protection scope of this application. Therefore, the protection scope of this application shall be subject to the protection scope of the claims.

## Claims

1. A method for responding to an incoming call, wherein the method is performed by a first terminal (100), the first terminal (100) has a first subscriber identity module SIM number, and the method comprises:
receiving, from a network, an incoming call that is for the first SIM number and that is from a third SIM number; and
in response to an incoming call rejection instruction that is entered by a user for the incoming call, sending, to the network, a message used to reject the incoming call;
receiving first information from a second terminal (200), wherein the first information comprises an identity of a cell to which the second terminal (200) belongs;
when the first terminal (100) and the second terminal (200) have a same cell identity, if a distance between the first terminal (100) and the second terminal (200) is less than a preset threshold, sending indication information to the second terminal (200), wherein the indication information is used to indicate the second terminal (200) to send, to the network, a message used to reject the incoming call, and the indication information comprises one or more of the third SIM number, the first SIM number, location information of the first terminal (100); wherein the second terminal (200) has a second SIM number, the second SIM number is the same as the first SIM number, the second terminal (200) and the first terminal (100) simultaneously receive, from the network, the incoming call that is for the first SIM number and the second SIM number and that is from the third SIM number.

2. The method according to claim 1, further comprising:
in response to the incoming call, providing an incoming call reminder.

3. The method according to claim 1 or 2, further comprising:
in response to the incoming call rejection instruction, stopping providing the incoming call reminder.

4. The method according to any one of claims 1-3, the method further comprises:
when receiving the incoming call, establishing, by the first terminal (100), a Bluetooth communication link with the second terminal (200).

5. The method according to any one of claims 1-4 further comprising:
receiving the first information from the second terminal (200) by using the Bluetooth communication link; or
sending the indication information to the second terminal (200) by using the Bluetooth communication link.

6. The method according to any one of claims 1-5, wherein after the first terminal (100) rejects the incoming call, the method further comprises:
disconnecting the Bluetooth communication link with the second terminal (200).

7. The method according to any one of claims 1-6, wherein before the first terminal (100) sends the indication information to the second terminal (200), the method further comprises:
determining that the second terminal (200) is a terminal that has a SIM number the same as the first SIM number.

8. The method according to any one of claims 1-7, wherein
the indication information carries the third SIM number.

9. A method for responding to an incoming call, wherein the method is performed by a second terminal (200), the second terminal (200) has a second subscriber identity module SIM number, and the method comprises:
receiving, from a network, an incoming call that is for the second SIM number and that is from a third SIM number;
receiving indication information from a first terminal (100), wherein the first terminal (100) has a first SIM number, the first SIM number is the same as the second SIM number, the first terminal (100) and the second terminal (200) simultaneously receive, from the network, the incoming call that is for the first SIM number and the second SIM number and that is from the third SIM number, and the indication information is used to indicate the second terminal (200) to send, to the network, a message used to reject the incoming call; and
sending, to the network based on the indication information, the message used to reject the incoming call;
wherein before the sending, to the network based on the indication information, the message used to reject the incoming call, the method further comprises:
determining that the second terminal (200) is a terminal that has a SIM number the same as the first SIM number; or
determining that an incoming call number in the incoming call is the same as an incoming call number carried in the indication information.

10. The method according to claim 9, further comprising:
in response to the incoming call, providing an incoming call reminder.

11. The method according to claim 10, further comprising:
in response to the indication information, stopping providing the incoming call reminder.

12. The method according to any one of claims 9-11, wherein after the second terminal (200) rejects the incoming call, the method further comprises:
disconnecting the Bluetooth communication link with the first terminal (100).

13. The method according to any one of claims 9-12, wherein
the indication information carries the third SIM number.

14. A terminal, comprising:
a memory, configured to store computer program code, wherein the computer program code comprises computer instructions; and
a processor, configured to: when the computer instructions are run, enable the terminal to perform the method according to any one of claims 1 to 13.

## Patentansprüche

1. Ein Verfahren zum Beantworten eines eingehenden Anrufs, wobei das Verfahren von einem ersten Endgerät (100) ausgeführt wird, das erste Endgerät (100) über eine erste Teilnehmeridentitätsmodul-SIM-Nummer verfügt und das Verfahren Folgendes umfasst:
Empfangen eines eingehenden Anrufs vom Netzwerk, der für die erste SIM-Nummer bestimmt ist und von einer dritten SIM-Nummer stammt; und
Als Antwort auf eine vom Benutzer für den eingehenden Anruf eingegebene Ablehnungsanweisung Senden einer Nachricht an das Netzwerk, die zum Ablehnen des eingehenden Anrufs verwendet wird;
Empfangen von ersten Informationen von einem zweiten Endgerät (200), wobei die ersten Informationen eine Identität einer Zelle umfassen, zu der das zweite Endgerät (200) gehört;
Wenn das erste Endgerät (100) und das zweite Endgerät (200) dieselbe Zellidentität haben, falls der Abstand zwischen dem ersten Endgerät (100) und dem zweiten Endgerät (200) kleiner als ein voreingestellter Schwellenwert ist, Senden von Anzeigeinformationen an das zweite Endgerät (200), wobei die Anzeigeinformationen verwendet werden, um dem zweiten Endgerät (200) anzuzeigen, dass es eine zum Ablehnen des eingehenden Anrufs verwendete Nachricht an das Netzwerk senden soll, und die Anzeigeinformationen umfassen eines oder mehrere der folgenden: die dritte SIM-Nummer, die erste SIM-Nummer, Standortinformationen des ersten Endgeräts (100); wobei das zweite Endgerät (200) eine zweite SIM-Nummer besitzt, die zweite SIM-Nummer mit der ersten SIM-Nummer identisch ist, das zweite Endgerät (200) und das erste Endgerät (100) empfangen gleichzeitig vom Netzwerk den für die erste und zweite SIM-Nummer bestimmten und von der dritten SIM-Nummer kommenden eingehenden Anruf.

2. Verfahren nach Anspruch 1, weiterhin umfassend:
Als Antwort auf den eingehenden Anruf Bereitstellung einer Anruferinnerung.

3. Verfahren nach Anspruch 1 oder 2, weiterhin umfassend:
Als Antwort auf die Ablehnungsanweisung für den eingehenden Anruf das Stoppen der Bereitstellung der Anruferinnerung.

4. Verfahren nach einem der Ansprüche 1-3, wobei das Verfahren weiterhin umfasst:
Beim Empfang des eingehenden Anrufs Aufbau einer Bluetooth-Kommunikationsverbindung durch das erste Endgerät (100) mit dem zweiten Endgerät (200).

5. Verfahren nach einem der Ansprüche 1-4, weiterhin umfassend:
Empfangen der ersten Informationen vom zweiten Endgerät (200) mittels der Bluetooth-Kommunikationsverbindung; oder
Senden der Anzeigeinformationen an das zweite Endgerät (200) mittels der Bluetooth-Kommunikationsverbindung.

6. Verfahren nach einem der Ansprüche 1-5, wobei nach der Ablehnung des eingehenden Anrufs durch das erste Endgerät das Verfahren weiterhin umfasst:
die Bluetooth-Kommunikationsverbindung mit dem zweiten Endgerät (200) zu trennen.

7. Verfahren nach einem der Ansprüche 1-6, wobei vor dem Senden der Hinweisinformation durch das erste Endgerät (100) an das zweite Endgerät (200) das Verfahren weiterhin umfasst:
Feststellen, dass das zweite Endgerät (200) ein Endgerät ist, das eine SIM-Nummer hat, die mit der ersten SIM-Nummer identisch ist.

8. Verfahren nach einem der Ansprüche 1-7, wobei
die Hinweisinformation die dritte SIM-Nummer trägt.

9. Ein Verfahren zum Reagieren auf einen eingehenden Anruf, wobei das Verfahren von einem zweiten Endgerät (200) durchgeführt wird, das zweite Endgerät (200) eine zweite Teilnehmer-Identitätsmodul-SIM-Nummer hat und das Verfahren umfasst:
Empfangen eines vom Netzwerk kommenden eingehenden Anrufs, der für die zweite SIM-Nummer bestimmt ist und von einer dritten SIM-Nummer stammt;
Empfangen von Hinweisinformationen von einem ersten Endgerät (100), wobei das erste Endgerät (100) eine erste SIM-Nummer hat, die erste SIM-Nummer mit der zweiten SIM-Nummer identisch ist, das erste Endgerät (100) und das zweite Endgerät (200) gleichzeitig vom Netzwerk den eingehenden Anruf empfangen, der für die erste und die zweite SIM-Nummer bestimmt ist und von der dritten SIM-Nummer stammt, und die Hinweisinformation dazu verwendet wird, das zweite Endgerät (200) anzuweisen, an das Netzwerk eine Nachricht zu senden, um den eingehenden Anruf abzulehnen; und
Senden, basierend auf den Hinweisinformationen, einer zum Ablehnen des eingehenden Anrufs verwendeten Nachricht an das Netzwerk;
wobei vor dem Senden der Nachricht zum Ablehnen des eingehenden Anrufs an das Netzwerk basierend auf den Hinweisinformationen das Verfahren weiterhin umfasst:
Feststellen, dass das zweite Endgerät (200) ein Endgerät ist, das eine SIM-Nummer hat, die mit der ersten SIM-Nummer identisch ist; oder
Feststellen, dass eine eingehende Anrufnummer im eingehenden Anruf mit einer in den Hinweisinformationen übertragenen eingehenden Anrufnummer übereinstimmt.

10. Verfahren nach Anspruch 9, weiterhin umfassend:
Im Antwort auf den eingehenden Anruf wird eine Anrufbenachrichtigung bereitgestellt.

11. Verfahren nach Anspruch 10, weiterhin umfassend:
Im Antwort auf die Hinweisinformation wird die Bereitstellung der Anrufbenachrichtigung gestoppt.

12. Verfahren nach einem der Ansprüche 9-11, wobei nachdem das zweite Endgerät (200) den eingehenden Anruf abgelehnt hat, das Verfahren weiterhin umfasst:
Trennen der Bluetooth-Kommunikationsverbindung mit dem ersten Endgerät (100).

13. Verfahren nach einem der Ansprüche 9-12, wobei
Die Anzeigeinformation trägt die dritte SIM-Nummer.

14. Ein Endgerät, umfassend:
einen Speicher, der dazu konfiguriert ist, Computerprogrammcode zu speichern, wobei der Computerprogrammcode Computeranweisungen umfasst; und
einen Prozessor, der dazu konfiguriert ist, wenn die Computeranweisungen ausgeführt werden, das Endgerät zur Durchführung des Verfahrens nach einem der Ansprüche 1 bis 13 zu befähigen.

## Revendications

1. Procédé de réponse à un appel entrant, ledit procédé étant exécuté par un premier terminal (100), le premier terminal (100) possédant un premier numéro de carte SIM, et le procédé comprenant :
recevoir, depuis un réseau, un appel entrant destiné au premier numéro SIM et provenant d'un troisième numéro SIM ; et
en réponse à une instruction de rejet de l'appel entrant saisie par un utilisateur pour l'appel entrant, envoyer au réseau un message servant à rejeter l'appel entrant ;
recevoir des premières informations d'un second terminal (200), ces premières informations comprenant l'identité d'une cellule à laquelle appartient le second terminal (200) ;
lorsque le premier terminal (100) et le second terminal (200) ont une même identité de cellule, si une distance entre le premier terminal (100) et le second terminal (200) est inférieure à un seuil prédéfini, envoyer une information d'indication au second terminal (200), l'information d'indication servant à indiquer au second terminal (200) d'envoyer, au réseau, un message servant à rejeter l'appel entrant, et l'information d'indication comprenant un ou plusieurs des éléments suivants : le troisième numéro SIM, le premier numéro SIM, une information de localisation du premier terminal (100) ; où le second terminal (200) possède un deuxième numéro SIM, le deuxième numéro SIM étant identique au premier numéro SIM, le second terminal (200) et le premier terminal (100) reçoivent simultanément, du réseau, l'appel entrant destiné au premier numéro SIM et au deuxième numéro SIM et provenant du troisième numéro SIM.

2. Procédé selon la revendication 1, comprenant en outre :
en réponse à l'appel entrant, fournir un avertissement d'appel entrant.

3. Procédé selon la revendication 1 ou 2, comprenant en outre :
en réponse à l'instruction de rejet de l'appel entrant, cesser de fournir l'avertissement d'appel entrant.

4. Procédé selon l'une quelconque des revendications 1 à 3, le procédé comprenant en outre :
lors de la réception de l'appel entrant, établir, par le premier terminal (100), un lien de communication Bluetooth avec le second terminal (200).

5. Procédé selon l'une quelconque des revendications 1 à 4, comprenant en outre :
recevoir les premières informations du second terminal (200) en utilisant la liaison de communication Bluetooth ; ou
envoyer l'information d'indication au second terminal (200) en utilisant la liaison de communication Bluetooth.

6. Procédé selon l'une quelconque des revendications 1 à 5, dans lequel après que le premier terminal (100) a rejeté l'appel entrant, le procédé comprend en outre :
déconnexion du lien de communication Bluetooth avec le second terminal (200).

7. Le procédé selon l'une quelconque des revendications 1 à 6, dans lequel, avant que le premier terminal (100) n'envoie les informations d'indication au second terminal (200), le procédé comprend en outre :
détermination que le second terminal (200) est un terminal possédant un numéro SIM identique au premier numéro SIM.

8. Le procédé selon l'une quelconque des revendications 1 à 7, dans lequel
les informations d'indication transportent le troisième numéro SIM.

9. Un procédé de réponse à un appel entrant, dans lequel le procédé est exécuté par un second terminal (200), le second terminal (200) ayant un second numéro de carte SIM, et le procédé comprend :
réception, de la part d'un réseau, d'un appel entrant destiné au second numéro SIM et provenant d'un troisième numéro SIM ;
réception d'informations d'indication provenant d'un premier terminal (100), le premier terminal (100) ayant un premier numéro SIM, ce premier numéro SIM étant identique au second numéro SIM, le premier terminal (100) et le second terminal (200) reçoivent simultanément, depuis le réseau, l'appel entrant destiné au premier numéro SIM et au second numéro SIM et provenant du troisième numéro SIM, et les informations d'indication servent à indiquer au second terminal (200) d'envoyer, au réseau, un message destiné à rejeter l'appel entrant ; et
envoi, au réseau sur la base des informations d'indication, du message destiné à rejeter l'appel entrant ;
où, avant l'envoi, au réseau sur la base des informations d'indication, du message destiné à rejeter l'appel entrant, le procédé comprend en outre :
détermination que le second terminal (200) est un terminal possédant un numéro SIM identique au premier numéro SIM ; ou
détermination que le numéro de l'appel entrant dans l'appel entrant est identique au numéro d'appel entrant transmis dans les informations d'indication.

10. Le procédé selon la revendication 9, comprenant en outre :
en réponse à l'appel entrant, présentation d'une notification d'appel entrant.

11. Le procédé selon la revendication 10, comprenant en outre :
en réponse aux informations d'indication, arrêt de la présentation de la notification d'appel entrant.

12. Le procédé selon l'une quelconque des revendications 9 à 11, dans lequel, après que le second terminal (200) a rejeté l'appel entrant, le procédé comprend en outre :
déconnexion du lien de communication Bluetooth avec le premier terminal (100).

13. Le procédé selon l'une quelconque des revendications 9 à 12, dans lequel
les informations d'indication portent le troisième numéro SIM.

14. Un terminal, comprenant :
une mémoire, configurée pour stocker un code de programme informatique, ledit code de programme informatique comprenant des instructions informatiques ; et
un processeur, configuré pour : lorsque les instructions informatiques sont exécutées, permettre au terminal de mettre en œuvre la méthode selon l'une quelconque des revendications 1 à 13.
